# EUROPÄISCHE PATENTSCHRIFT

(11) **EP 1 588 927 B1**
(45) Veröffentlichungstag und Bekanntmachung des Hinweises auf die Patenterteilung: **24.07.2013**
(21) Anmeldenummer: 05102681.3
(22) Anmeldetag: 05.04.2005
(51) Int. Cl.: B62D 6/00, B62D 7/15, B62D 5/00

(54) **Kraftfahrzeug mit aktiv lenkbaren Hinterrädern**
Automotive vehicle with active rear wheel steering
Véhicule automobile avec direction active des roues arrières

(30) Priorität: 24.04.2004 DE 102004020074
(43) Veröffentlichungstag der Anmeldung: 26.10.2005
(73) Patentinhaber: Bayerische Motoren Werke Aktiengesellschaft, 80809 München (DE)
(72) Erfinder: Smakman, Hendrikus, 80636, München (DE); Pauly, Axel, 85757, Karlsfeld (DE)

(56) Entgegenhaltungen:
- EP-A- 0 331 203
- DE-A1- 3 808 490
- DE-A1- 4 229 463
- DE-A1- 19 509 859

## Beschreibung

Die Erfindung betrifft ein Kraftfahrzeug mit zusätzlich zu den Vorderrädern aktiv lenkbaren Hinterrädern, deren Radaufhängung ein passiv untersteuerndes Eigenlenkverhalten hervorruft und die in Abhängigkeit vom aktuellen Fahrerwunsch und aktuellen dynamischen Betriebsparametern des Fahrzeugs eingeschlagen werden. Zum technischen Umfeld wird neben der DE 38 12 957 A1 insbesondere auf die DE 38 08 490 A1 verwiesen.

Grundsätzlich bekannt sind aktiv lenkbare Hinterräder an zweispurigen vierrädrigen Kraftfahrzeugen mit lenkbaren Vorderrädern. Der Begriff des "aktiven Lenkens" soll dabei ein Einschlagen der Hinterräder unabhängig von deren Eigenlenkverhalten, das durch die Kinematik der Radaufhängung gegeben ist, verdeutlichen, bspw. mittels eines geeignet angesteuerten Stellmotors. In der zweitgenannten Schrift ist ferner auf das ebenfalls grundsätzlich bekannte passive Eigenlenkverhalten von Fzg.-Hinterrädern hingewiesen, wonach diese beim schnelleren Durchfahren einer Kurve im untersteuernden Sinn verschwenkt werden, was bedeutet, dass die Hinterräder im gleichen Drehsinn verschwenkt werden wie die gelenkten, eingeschlagenen Vorderräder. In beiden genannten Schriften ist ferner beschrieben, dass bei höheren Fahrgeschwindigkeiten (bspw. oberhalb 15 m/s) diesem passiven Eigenlenkverhalten der Hinterräder eine aktive Lenkbewegung überlagert wird, die von bestimmtem dynamischen Betriebsparametern des Fahrzeugs abhängt, nämlich u.a. von der Querbeschleunigung des Fahrzeugs, von der Fahrzeug-Giergeschwindigkeit und von der Winkelgeschwindigkeit des vom Fahrer betätigten Lenkrads. Das grundsätzlich gutmütige, d.h. untersteuernde Fahrverhalten des Fahrzeugs wird dabei durch die aktive Hinterrad-Lenkung im bekannten Stand der Technik noch verstärkt.

Diese genannte Verstärkung des untersteuernden Fahrverhaltens kann jedoch dazu führen, dass das Fahrzeug dann nicht mehr ausreichend auf die Fahrerlenkeingabe reagiert, d.h. dass die Lenkbarkeit des Fahrzeugs herabgesetzt ist. Dies wird vom Fahrer des Fahrzeugs als unangenehm empfunden.

Eine Abhilfemaßnahme für diese geschilderte Problematik aufzuzeigen, ist Aufgabe der vorliegenden Erfindung.
Eine erste Lösung dieser Aufgabe ist für ein Kraftfahrzeug nach dem Oberbegriff des Anspruchs 1 dadurch gekennzeichnet, dass die Hinterräder im Grenzbereich des progressiven Untersteuerns aktiv derart gelenkt werden, dass deren Lenkeinschlag bei Gleichsinnigkeit mit demjenigen der Vorderräder geringer als der durch das Eigenlenkverhalten hervorgerufene wird oder sogar demjenigen der Vorderräder entgegengerichtet wird. Eine zweite Lösung dieser Aufgabe ist für ein Kraftfahrzeug nach dem Oberbegriff des Anspruchs 1 dadurch gekennzeichnet, dass die Hinterräder dann, wenn der Fahrer das Fahrzeug bei Kurvenfahrt beschleunigt, derart gelenkt werden, dass deren Lenkeinschlag bei Gleichsinnigkeit mit demjenigen der Vorderräder geringer als der durch das Eigenlenkverhalten hervorgerufene wird oder sogar demjenigen der Vorderrädern entgegengerichtet wird. Dabei können durchaus diese beiden vorgeschlagenen Maßnahmen miteinander kombiniert werden.

Nach dem ersten Lösungsvorschlag wird somit eine Überwachung dahingehend vorgeschlagen, ob sich das Fahrzeug in einem Bereich bewegt, in dem ein vom Fahrer mit seiner Lenkhandhabe vorgegebener Lenkwunsch kaum mehr umgesetzt wird, weil zur Erzielung eines sicheren untersteuernden Fahrverhaltens die Hinterräder bereits in nennenswertem Umfang bzw. in stark ansteigendem Maße gleichsinnig zu den Fzg.-Vorderrädern eingeschlagen werden. Dieser Betriebsbereich wird als Grenzbereich des progressiven Untersteuerns bezeichnet. Da sich dieses Untersteuern bzw. das entsprechende Eigenlenkverhalten der Hinterräder zunächst praktisch passiv einstellen kann, ohne dass ein aktiver Stelleingriff durch einen Stellmotor oder dgl. erfolgt, d.h. ohne dass die Hinterräder aktiv gelenkt werden, kann man in diesem Zusammenhang auch von einem passiven progressiven Untersteuern sprechen. Wenn sich nun das Fahrzeug in diesem Betriebsbereich des progressiven Untersteuerns bewegt, der im übrigen auch durch eine aktive Hinterradlenkung erreicht werden kann, so soll dieses jedoch insbesondere durch das Eigenlenkverhalten hervorgerufene Untersteuern zumindest teilweise dadurch kompensiert werden, dass die Hinterräder zusätzlich zu der ursprünglichen mit den eingeschlagenen Vorderrädern gleichgerichteten Verschwenkbewegung, die insbesondere durch das Eigenlenkverhalten hervorgerufen sein kann, in einem zu den eingeschlagenen Vorderrädern entgegengerichteten Drehsinn gelenkt werden. Dies muss jedoch nicht soweit gehen und bedeutet somit nicht, dass die Hinterräder gegensinnig zu den Vorderrädern eingeschlagen werden oder sind, so wie dies bspw. in der eingangs erstgenannten
DE 38 12 957 A1 für eine Fahrgeschwindigkeit kleiner als 50 km/h dargestellt ist. Vielmehr sollen die aktiv lenkbaren Hinterräder lediglich geringer als mit dem ursprünglich vorgesehenen dem Einschlag der Vorderräder gleichgerichteten Lenkwinkel gelenkt werden, d.h. wenn letztere bspw. nach rechts eingeschlagen werden, so werden die Hinterräder ausgehend von der sich insbesondere durch die Hinterachs-Kinematik passiv einstellenden Position zumindest geringfügig nach links gelenkt. Der Radeinschlag der Hinterräder kann dann jedoch weiterhin gleichsinnig mit den Vorderrädern sein; es können mit dem vorgeschlagenen aktiven Lenken der Hinterräder diese jedoch auch parallel zur Fzg.-Längsachse ausgerichtet sein oder es können die Hinterräder sogar gegensinnig zu den Vorderrädern eingeschlagen sein.

Die Lenkbarkeit des Fahrzeugs, d.h. dessen Reaktion auf die Fahrerwunschvorgabe kann hierdurch im genannten Grenzbereich deutlich verbessert werden. Abhängig von der gewünschten Auslegung eines erfindungsgemäßen Lenksystems kann somit sogar ein tendenzielles Übersteuern eingestellt werden. Dies ist insbesondere dann unkritisch, wenn das Fahrzeug mit einer an sich bekannten Gierratenregelung ausgerüstet ist, die ein kritisches Übersteuern erkennt und daraufhin eine geeignete Gegenmaßnahme einleitet. Eine solche kann zunächst darin bestehen, dass die vorgeschlagene aktive Lenkfunktion an den Hinterrädern wieder rückgängig gemacht wird, d.h. dass die Hinterräder dann wieder im gleichen Sinn wie die Vorderräder eingeschlagen werden. Sollte diese Maßnahme nicht ausreichen, so kann - falls das Fahrzeug im Sinne einer vorteilhaften Weiterbildung mit einer entsprechenden Funktion ausgerüstet ist - eine selbsttätige Lenkfunktion der Vorderräder dem Fahrerwunsch einen das Fahrdynamik-Verhalten des Fahrzeugs stabilisierenden Lenkwinkel überlagern. Neben den sog. steer-by-wire-Systemen können hierfür auch die dem Fachmann bekannten Überlagerungslenkungen zum Einsatz kommen.

Bevorzugt erfolgt der Übergang von einem mit den gelenkten Vorderrädern gleichsinnigen Radeinschlag der Hinterräder zu einem dem Eigenlenkverhalten entgegengerichteten Lenken im Grenzbereich des progressiven Untersteuerns dann, wenn die Differenz zwischen dem aus dem Fahrerwunsch abgeleiteten und dem tatsächlichen Fahrdynamik-Verhalten des Fahrzeugs einen Schwellwert überschreitet, wobei dieser Fahrzeugs einen Schwellwert überschreitet, wobei dieser Schwellwert abhängig von der Fahrgeschwindigkeit des Fahrzeugs sein kann, um dem Fahrer die jeweils fahrdynamisch bestmögliche Auslegung bzw. Fahrzeug-Reaktion zur Verfügung zu stellen.

Ein Übergang von einem mit den gelenkten Vorderrädern gleichsinnigen Radeinschlag der Hinterräder zu einem diesem entgegengerichteten Lenken in der Weise, dass der Lenkeinschlag der Hinterräder bei Gleichsinnigkeit mit demjenigen der Vorderräder geringer als der durch das Eigenlenkverhalten hervorgerufene wird oder sogar demjenigen der Vorderräder entgegengerichtet wird, kann aber auch dann erfolgen, wenn der Fahrer das Fahrzeug bei Kurvenfahrt beschleunigt. Letzteres fördert bekanntlich das Entstehen eines eindrehenden Giermomentes, wobei in Kombination mit dem hiermit vorgeschlagenen Lenkansatz für aktiv lenkbare Hinterräder ein vom Fahrzeug-Fahrer in der Regel gewünschtes sog. "Lenken über das Gaspedal" deutlich verbessert wird. Selbstverständlich kann das entsprechende aktive Lenken der Hinterräder in Abhängigkeit der beiden genannten Kriterien sowohl nebeneinander als auch miteinander erfolgen, d.h. wenn der Fahrer bei Kurvenfahrt beschleunigt und/oder wenn sich das Fahrzeug im Grenzbereich des progressiven Untersteuerns bewegt. Ferner gelten die weiter oben gemachten Ausführungen zur aktiven Hinterrad-Lenkung im Grenzbereich des progressiven Untersteuerns in vergleichbarer Weise auch für eine aktiven Hinterrad-Lenkung im Falle eines Beschleunigen des Fahrzeugs bei Kurvenfahrt. Insbesondere sind für den letztgenannten Fall geeignete stabilisierende Eingriffe einer Gierratenregelung möglich.

Die genannten Größen, in Abhängigkeit derer ein vorgeschlagenes aktives Lenken der Hinterräder durchgeführt wird, können in grundsätzlich bekan n-ter Weise ermittelt werden, nämlich der sog. Fahrerwunsch aus dem vorgegebenen Lenkwinkel und der Fahrgeschwindigkeit, aus welcher auch die Beschleunigung des Fahrzeugs ableitbar ist, wobei aber auch ein Fahrpedalsignal des Fahrers berücksichtigt werden kann, während das tatsächliche Fahrdynamik-Verhalten des Fahrzeugs aus der Gierrate und der Querbeschleunigung bestimmt wird, jedoch kann dies sowie eine Vielzahl weiterer Details durchaus abweichend von obigen Erläuterungen gestaltet sein, ohne den Inhalt der Patentansprüche zu verlassen. Stets wird jedoch durch das erfindungsgemäße Lenken der Fzg.-Hinterräder bei schnellerer Kurvenfahrt ein zusätzliches Giermoment erzeugt, das der Fahrer als eine Gierbeschleunigung bzw. Eindrehbewegung wahrnimmt, so dass die im bekannten Stand der Technik reduzierte Lenkbarkeit des Fahrzeugs vom Fahrer subjektiv als verringert wahrgenommen wird. Dabei wird das Fahrzeug zusätzlich in eine Position gebracht, die bei Beendigung des sog. Sättigungszustandes an der Vorderachse, in welchem die Vorderräder keine zusätzliche Seitenkraft mehr aufnehmen können, dem aktuellen Fahrerwunsch entspricht. Vorteilhafterweise verändert das vorgeschlagene System nicht das passive Verhalten der Hinterräder, so dass bei einem Systemausfall weiterhin ein sicheres untersteuerndes Fahrverhalten vorliegt.

## Patentansprüche

1. Kraftfahrzeug mit zusätzlich zu den Vorderrädern aktiv lenkbaren Hinterrädern, deren Radaufhängung ein passiv untersteuerndes Eigenlenkverhalten hervorruft und die in Abhängigkeit vom aktuellen Fahrerwunsch und aktuellen dynamischen Betriebsparametern des Fahrzeugs eingeschlagen werden,
**dadurch gekennzeichnet, dass** die Hinterräder im Grenzbereich des progressiven Untersteuerns aktiv derart gelenkt werden, dass deren Lenkeinschlag bei Gleichsinnigkeit mit demjenigen der Vorderräder geringer als der durch das Eigenlenkverhalten hervorgerufene wird oder sogar demjenigen der Vorderräder entgegengerichtet wird.

2. Kraftfahrzeug nach Anspruch 1,
**dadurch gekennzeichnet, dass** der Übergang von einem mit den gelenkten Vorderrädern gleichsinnigen Radeinschlag der Hinterräder zu einem dem Eigenlenkverhalten entgegengerichteten Lenken im Grenzbereich des progressiven Untersteuerns dann durchgeführt wird, wenn die Differenz zwischen dem aus dem Fahrerwunsch abgeleiteten und dem tatsächlichen Fahrdynamik-Verhalten des Fahrzeugs einen Schwellwert überschreitet.

3. Kraftfahrzeug nach Anspruch 2,
**dadurch gekennzeichnet, dass** der Schwellwert abhängig von der Fahrgeschwindigkeit des Fahrzeugs ist.

4. Kraftfahrzeug mit zusätzlich zu den Vorderrädern aktiv lenkbaren Hinterrädern, deren Radaufhängung ein passiv untersteuerndes Eigenlenkverhalten hervorruft und die in Abhängigkeit vom aktuellen Fahrerwunsch und aktuellen dynamischen Betriebsparametern des Fahrzeugs eingeschlagen werden,
**dadurch gekennzeichnet, dass** die Hinterräder dann, wenn der Fahrer das Fahrzeug bei Kurvenfahrt beschleunigt, derart gelenkt werden, dass deren Lenkeinschlag bei Gleichsinnigkeit mit demjenigen der Vorderräder geringer als der durch das Eigenlenkverhalten hervorgerufene wird oder sogar demjenigen der Vorderräder entgegengerichtet wird.

5. Kraftfahrzeug nach einem der vorangegangenen Ansprüche,
**dadurch gekennzeichnet, dass** der Übergang von einem mit den gelenkten Vorderrädern gleichsinnigen Radeinschlag der Hinterräder zu einem entgegengerichteten Lenken im Grenzbereich des progressiven Untersteuerns durchgeführt wird, wenn der Fahrer das Fahrzeug bei Kurvenfahrt beschleunigt.

6. Kraftfahrzeug mit einer Gierratenregelung nach einem der vorangegangenen Ansprüche,
**dadurch gekennzeichnet, dass** die Vorderräder mit einer selbsttätigen Lenkfunktion ausgestattet sind, die dem Fahrerwunsch einen das Fahrdynamik-Verhalten des Fahrzeugs stabilisierenden Lenkwinkel überlagert.

## Claims

1. A motor vehicle with, in addition to the front wheels, actively steerable rear wheels, the wheel suspension of which causes a passively understeering self-steering effect and which are turned depending on the current driver's intention and current dynamic operating parameters of the vehicle, **characterised in that** the rear wheels are actively steered in the limit region of the progressive understeer in such a way that their steering angle, when in the same direction as that of the front wheels, is less than that caused by the self-steering effect or even opposed to that of the front wheels.

2. A motor vehicle according to claim 1, **characterised in that** the transition from a wheel angle of the rear wheels, which is in the same direction as the steered front wheels, to a steering opposed to the self-steering effect in the limit region of the progressive understeer is carried out when the difference between the driving dynamic behaviour derived from the driver's intention and the actual driving dynamic behaviour of the vehicle exceeds a threshold value.

3. A motor vehicle according to claim 2, **characterised in that** the threshold value depends on the driving speed of the vehicle.

4. A motor vehicle with, in addition to the front wheels, actively steerable rear wheels, the wheel suspension of which causes a passively understeering self-steering effect and which are turned depending on the current driver's intention and current dynamic operating parameters of the vehicle, **characterised in that** the rear wheels, when the driver accelerates the vehicle when cornering, are steered in such a way that their steering angle, when in the same direction as that of the front wheels, is less than that caused by the self-steering effect or is even opposed to that of the front wheels.

5. A motor vehicle according to any one of the preceding claims, **characterised in that** the transition from a wheel angle of the rear wheels in the same direction as the steered front wheels to a steering in the opposite direction in the limit region of the progressive understeer is carried out when the driver accelerates the vehicle when cornering.

6. A motor vehicle with a yaw rate control according to any one of the preceding claims, **characterised in that** the front wheels are equipped with an automatic steering function, which overlays the driver's intention with a steering angle stabilising the driving dynamic behaviour of the vehicle.

## Revendications

1. Véhicule ayant en plus de celles des roues avant, active des roues arrière directrices actives dont la suspension des roues génère un comportement sous-vireur passif qui sont braquées en fonction de la demande actuelle du conducteur et des paramètres de fonctionnement actuels dynamiques du véhicule,
**caractérisé en ce que**
les roues arrière sont braquées de manière active dans la zone limite du sous-virage progressif de sorte que leur braquage dans le même sens que celui des roues avant soit inférieur à celui appelé par le comportement directionnel propre ou même dans le sens opposé à celui des roues avant.

2. Véhicule selon la revendication 1,
**caractérisé en ce que**
on passe alors d'un braquage des roues arrière dans le même sens que celui des roues avant directrices vers un braquage de sens opposé au comportement directionnel propre dans la zone limite du sous-virage progressif, lorsque la différence entre le comportement demandé par le conducteur et le comportement dynamique de conduite réelle du véhicule dépasse un seuil.

3. Véhicule selon la revendication 2,
**caractérisé en ce que**
la valeur de seuil dépend de la vitesse du véhicule.

4. Véhicule ayant en plus de celles des roues avant, active des roues arrière directrices actives dont la suspension des roues génère un comportement sous-vireur passif qui sont braquées en fonction de la demande actuelle du conducteur et des paramètres de fonctionnement actuels dynamiques du véhicule,
**caractérisé en ce que**
les roues arrière, lorsque le conducteur accélère le véhicule dans une courbe, sont braquées de sorte que leur braquage dans le même sens que celui des roues avant soit inférieur à celui appelé par le comportement directionnel propre ou même dans le sens opposé à celui des roues avant.

5. Véhicule selon l'une des revendications précédentes,
**caractérisé en ce qu'**
on passe alors d'un braquage des roues arrière dans le même sens que celui des roues avant directrices vers un braquage de sens opposé au comportement directionnel propre dans la zone limite du sous-virage progressif, lorsque le conducteur accélère le véhicule dans une courbe.

6. Véhicule avec une régulation de la vitesse de giration selon l'une des revendications précédentes,
**caractérisé en ce que**
les roues avant sont réalisées avec une fonction de braquage autonome qui a la priorité sur la demande du conducteur pour établir un angle de braquage stabilisant la dynamique de conduite du véhicule.
